Europäisches Patentamt

European Patent Office

Office européen des brevets

(11) Veröffentlichungsnummer: **0 686 672 A1**

## (12) EUROPÄISCHE PATENTANMELDUNG

(21) Anmeldenummer: **95104783.6**

(22) Anmeldetag: **31.03.95**

(51) Int. Cl.6: **C08L 95/00**, C09D 195/00, C09D 5/18, C08K 5/3492, C08K 3/18, C08K 3/22, C08K 3/36, C08K 9/12

(30) Priorität: **10.06.94 CH 1862/94**

(43) Veröffentlichungstag der Anmeldung:
**13.12.95 Patentblatt 95/50**

(84) Benannte Vertragsstaaten:
**AT CH DE DK FR IT LI SE**

(71) Anmelder: **SIEGFRIED KELLER AG**
**Industriestrasse 45**
**CH-8304 Wallisellen (CH)**

(72) Erfinder: **Kastien, Heinz**
**Im oberen Boden 1/46**
**CH-8049 Zürich (CH)**

(74) Vertreter: **Patentanwälte Schaad, Balass &**
**Partner AG**
**Dufourstrasse 101**
**Postfach**
**CH-8034 Zürich (CH)**

(54) **Spritzbare, schalldämpfende Beschichtungsmasse**

(57) Die spritzbare, schalldämpfende Beschichtungsmasse enthält als Bindemittel eine Bitumenemulsion und anorganische Füllstoffe. Weiter enthält sie ein flammhemmendes Additiv, das bei erhöhten Temperaturen einen gasförmigen, nichtbrennbaren Stoff freisetzt.

Die Erfindung betrifft eine spritzbare, schalldämpfende Beschichtungsmasse gemäss dem Oberbegriff von Anspruch 1.

Spritzbare Beschichtungsmassen auf Bitumenbasis der eingangs genannten Art sind bekannt. Sie wurden u.a. zur Schalldämpfung, insbesondere zur Körperschalldämpfung an Fahrzeugen, Maschinen und an anderen Geräten verwendet. Ihre Verwendung wird heute aus sicherheitstechnischen Gründen wegen ihrer Brennbarkeit abgelehnt.

Ausser der Brandsicherheit werden an schalldämpfende Beschichtungsmassen eine grosse Anzahl von Anforderungen gestellt. Sie sollten korrosionshemmend und ungiftig sein. Ihre Wasseraufnahme soll möglichst niedrig sein; sie soll im allgemeinen 15% und vorzugsweise 10% nicht übersteigen. Die Wärmeleitung ist möglichst niedrig zu halten. Bei erhöhten Temperaturen dürfen sie keine giftigen Zersetzungsprodukte abgeben. Weiterhin sollen sie ein niedriges spezifisches Gewicht und einen hohen Festkörpergehalt von vorzugsweise 70 Gew.-% haben.

Um den Sicherheitsanforderungen bezüglich Brennbarkeit zu genügen, wurden die spritzbaren Beschichtungsmassen auf Basis von Bitumenemulsionen durch solche auf Basis synthetischer Harze ersetzt. Eine solche spritzbare Beschichtungsmasse zur Schalldämpfung wird beispielsweise in der EP-A 0 386 646 beschrieben.

Die für die Dispersion von synthetischen Harzen erforderliche, verhältnismässig grosse Menge an Emulgatoren bewirkt eine zu hohe Wasseraufnahme des mit dieser bekannten Beschichtungsmasse hergestellten trockenen Filmes. Die hohe Wasseraufnahme ist unerwünscht.

Ziel der vorliegenden Erfindung ist es deshalb, eine spritzbare, schalldämpfende Beschichtungsmasse der eingangs genannten Art vorzuschlagen, die trotz Verwendung von Bitumen als Bindemittel schwer entflammbar und vorzugsweise unbrennbar ist und nicht die Nachteile von Beschichtungsmassen auf Basis von Kunstharzen aufweist.

Dieses Ziel wird durch die Merkmale des kennzeichnenden Teils von Anspruch 1 erreicht. Besonders bevorzugte Ausführungsformen der Erfindung bilden den Gegenstand der Ansprüche 2 bis 9.

Es wird vermutet, dass die Wirkung der erfindungsgemäss in der Beschichtungsmasse vorhandenen flammhemmenden Additive darauf beruht, dass die von ihnen bei hohen Temperaturen freigesetzten nichtbrennbaren Gase die Beschichtung gegen Luft abschirmen und dadurch die Entstehung einer Flamme verhindern, bzw. eine bereits vorhandene Flamme ersticken. Es ist überraschend, dass eine solche Massnahme bei Bitumen, dessen Brandverhalten weitgehend durch Freisetzen brennbarer Gase bestimmt wird, wirksam ist.

Bevorzugte flammhemmende Additive, die bei erhöhten Temperaturen einen gasförmigen, nichtbrennbaren Stoff freisetzen, sind u.a. Aluminiumhydroxid und Siliziumdioxid, die beide einen hohen Anteil, beispielsweise 25%, an chemisch gebundenem Wasser enthalten; Molekularsiebe, Silikagel und Melamin, Carbonate und Bicarbonate. Die genannten Stoffe geben bei erhöhter Temperatur Wasserdampf, Ammoniak oder Kohlendioxid ab.

Als Folge des Bitumenanteiles in der erfindungsgemässen Beschichtungsmasse ist nur eine kleine Emulgatorenmenge erforderlich. Eine Emulgatorenmenge von maximal 1 Gew.-%, bezogen auf den Gesamtfestkörper, ergibt einen Film oder eine Beschichtung mit einer sehr niedrigen Wasseraufnahme die unterhalb jener synthetischer Harzfilme liegt, was wiederum für die Korrosionsbeständigkeit von Vorteil ist.

Je nach Anwendungsgebiet kann ein Teil des Bitumens durch ein bekanntes synthetisches Harz ersetzt sein. Bei einem solche Teilersatz beträgt der Anteil an Bitumen mindestens 15 Gew.-% und der Anteil an synthetischem Harz höchstens 15 Gew.-%, bezogen auf den Gesamtfestkörper. Neben wässrigen Dispersionen von synthetischen Harzen können auch reemulgierbare Trockenharze eingesetzt werden.

Der Anteil der anorganischen Füllstoffe beträgt mindestens 30 Gew.-%, bezogen auf den Gesamtfestkörper. Als solche anorganischen oder mineralischen Füllstoffe können beispielsweise Talk, Glimmer, Schwerspat, Chlorit etc. verwendet werden. Bei den anorganischen Füllstoffen kann es sich teilweise oder ganz um Stoffe handeln, die bei erhöhten Temperaturen gasförmige, nichtbrennbare Stoffe freisetzen. Beispielsweise kann es sich bei den anorganischen Füllstoffen um Siliziumoxid, Calciumcarbonat, Calcium-Magnesiumcarbonat oder um andere bekannte Füllstoffe handeln.

Der Gesamtfestkörpergehalt der erfindungsgemässen Beschichtungsmasse beträgt mindestens 55 Gew.-%, vorzugsweise über 75 Gew.-%. Die erfindungsgemässe Beschichtungsmasse besitzt sehr gute Schalldämpfeigenschaften, eine niedrige Wasseraufnahme und ist schwer entflammbar bzw. nicht brennbar.

Die erfindungsgemässe Beschichtungsmasse lässt sich problemlos auch in dicken Schichten von 4 bis 5 mm ohne Rissbildung auftragen. Solche Schichten sind zusätzlich zu den obengenannten Vorteilen auch gegen Steinschlag beständig, was insbesondere für den Unterbodenschutz von Bedeutung ist.

Ein weiterer überraschender Vorteil der erfindungsgemässen Beschichtungsmasse ist ihre gute Wärmeisolierfähigkeit.

Als Bitumentypen für die erfindungsgemässe Beschichtungsmasse eignen sich vor allem solche mit einem Erweichungspunkt von 80 °C oder weniger.

Die nachfolgenden Beispiele veranschaulichen die Erfindung, ohne sie jedoch einzuschränken.

| Beispiel *) | 1 | 2 | 3 | 4 | 5 |
|---|---|---|---|---|---|
| Bitumenemulsion 60% | 25 | 30 | 32,5 | 35 | 30 |
| Synthetisches Harz | -- | -- | -- | -- | 10 |
| Entschäumer | 0,1 | 0,4 | 0,7 | 1,0 | 0,2 |
| Wasser | 44,7 | 30,9 | 20,6 | 12,5 | 23,3 |
| Netzmittel, nichtionogen | 0,1 | 0,5 | 0,8 | 1,0 | 1,0 |
| Topfkonservierungsmittel | 0,1 | 0,2 | 0,4 | 0,5 | 0,5 |
| Mineralische Füllstoffe | 25,0 | 30,0 | 33,0 | 35,0 | 30,0 |
| Flammhemmendes Additiv | 5,0 | 8,0 | 12,0 | 15,0 | 5,0 |

*) alle Zahlenangaben in Gew.-%, bezogen auf den Festkörper

Selbstverständlich können die erfindungsgemässen Beschichtungsmassen auch weitere bekannte Zusatz- und Hilfsstoffe enthalten.

**Patentansprüche**

1. Spritzbare, schalldämpfende Beschichtungsmasse auf Basis einer anorganische Füllstoffe enthaltenden wässrigen Bitumenemulsion, gekennzeichnet durch einen Bitumengehalt von höchstens 30 Gew.-%,

bezogen auf den Gesamtfestkörper und ein flammhemmendes Additiv, das bei erhöhten Temperaturen einen gasförmigen, nichtbrennbaren Stoff freisetzt.

2. Beschichtungsmasse nach Anspruch 1, dadurch gekennzeichnet, dass sie höchstens 1 Gew.-%, bezogen auf den Gesamtfestkörper, an Emulgatoren enthält.

3. Beschichtungsmasse nach einem der vorangehenden Ansprüche, dadurch gekennzeichnet, dass sie als flammhemmendes Additiv Aluminiumhydroxid und/oder Siliziumoxid mit einem hohen Anteil an chemisch gebundenem Wasser enthält.

4. Beschichtungsmasse nach einem der vorangehenden Ansprüche, dadurch gekennzeichnet, dass sie als flammhemmendes Additiv ein Molekularsieb enthält.

5. Beschichtungsmasse nach einem der vorangehenden Ansprüche, dadurch gekennzeichnet, dass sie als flammhemmendes Additiv Silikagel enthält.

6. Beschichtungsmasse nach einem der vorangehenden Ansprüche, dadurch gekennzeichnet, dass sie als flammhemmendes Additiv Melamin enthält.

7. Beschichtungsmasse nach einem der vorangehenden Ansprüche, dadurch gekennzeichnet, dass sie mindestens 15 Gew.-% an Bitumen und höchstens 15 Gew.-%, bezogen auf den Gesamtfestkörper, eines synthetischen Harzes enthält.

8. Beschichtungsmasse nach einem der vorangehenden Ansprüche, dadurch gekennzeichnet, dass sie Aluminiumformiat als Stabilisator enthält.

9. Beschichtungsmasse nach einem der vorangehenden Ansprüche, dadurch gekennzeichnet, dass sie mindestens 55 Gew.-%, vorzugsweise mindestens 75 Gew.-%, Gesamtfestkörper enthält.

10. Verwendung der Beschichtungsmasse nach einem der vorangehenden Ansprüche zur Beschichtung von Fahrzeuggehäusen, insbesondere von Eisenbahnwagen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | FR-A-2 369 322 (HULS) 26. Mai 1978<br>* Seite 5, Zeile 37 - Seite 6, Zeile 6 *<br>--- | | C08L95/00<br>C09D195/00<br>C09D5/18<br>C08K5/3492<br>C08K3/18<br>C08K3/22<br>C08K3/36<br>C08K9/12 |
| A | US-A-3 497 371 (I.B. CHANG) 24. Februar 1970<br>--- | | |
| A | US-A-3 296 165 (W.E. KEMP) 3. Januar 1967<br>--- | | |
| A | FR-A-2 539 750 (COMPOSANTS INDUSTRIALISES) 27. Juli 1984<br>--- | | |
| A | WO-A-84 02709 (MANVILLE SERVICE) 19. Juli 1984<br>----- | | |

**RECHERCHIERTE SACHGEBIETE (Int.Cl.6)**

C08L
C09D
C08K

Der vorliegende Recherchenbericht wurde für alle Patentansprüche erstellt

| Recherchenort | Abschlußdatum der Recherche | Prüfer |
|---|---|---|
| DEN HAAG | 12. Mai 1995 | Leroy, A |